# EUROPEAN PATENT APPLICATION

(11) **EP 4 434 617 A1**
(43) Date of publication of application: **25.09.2024**
(21) Application number: 22892728.1
(22) Date of filing: 07.11.2022
(51) Int. Cl.: B01J 20/22, B01J 20/28

(54) **DESULFURIZING AGENT**

(30) Priority: 15.11.2021 JP 2021185372
(71) Applicant: Panasonic Intellectual Property Management Co., Ltd., Kadoma-shi, Osaka 571-0057 (JP)
(72) Inventor: OTA, Tomohiro, Kadoma-shi, Osaka 571-0057 (JP); TAGUCHI, Kiyoshi, Kadoma-shi, Osaka 571-0057 (JP); SUZUKI, Motohiro, Kadoma-shi, Osaka 571-0057 (JP)
(74) Representative: Grünecker Patent- und Rechtsanwälte PartG mbB
(86) International application number: PCT/JP2022/041354
(87) International publication number: WO 2023/085229

(57) **Abstract**

A desulfurizing agent (2) according to the present disclosure includes a copper ion and a benzene-1,3,5 tricarboxylic acid and removes a sulfur compound from a fluid containing the sulfur compound. In the desulfurizing agent (2), an integrated value of pore volumes of pores each having a pore size larger than 0.75 nm and at most 2 nm is at least twice as high as an integrated value of pores volumes of pores each having a pore size of at most 0.75 nm.

## Description

### TECHNICAL FIELD

The present disclosure relates to a desulfurizing agent.

### BACKGROUND ART

Patent Literature (PTL) 1 discloses a method in which a fluid containing dimethyl sulfide is brought into contact with a metal-organic framework containing copper ions and organic ligands (benzene-1,3,5-tricarboxylic acid) to remove the dimethyl sulfide from the fluid.

### Citation List

### Patent Literature

[PTL 1] Japanese Patent Publication No. 6238150

### SUMMARY OF THE INVENTION

The present disclosure provides a desulfurizing agent capable of reducing the size of a desulfurizer by reducing the volume of the desulfurizing agent used in the desulfurizer.

A desulfurizing agent according to the present disclosure includes a copper ion and a benzene-1,3,5 tricarboxylic acid, and removes a sulfur compound from a fluid containing the sulfur compound. In the desulfurizing agent, an integrated value of pore volumes of pores each having a pore size larger than 0.75 nm and at most 2.00 nm is at least twice as high as an integrated value of pore volumes of pores each having a pore size of at most 0.75 nm.

In the desulfurizing agent according to the present disclosure, an integrated value of pore volumes of pores each having a pore size larger than 0.75 nm and at most 2.00 nm is at least twice as high as an integrated value of pore volumes of pores each having a pore size of at most 0.75 nm. This promotes the diffusion of the sulfur compound in the pores of the desulfurizing agent. As a result, the number of adsorption sites accessible by the sulfur compound increases.

Therefore, the amount of sulfur compound adsorbed per weight can be increased. Accordingly, it is possible to provide a desulfurizing agent capable of reducing the size of a desulfurizer by reducing the volume of the desulfurizing agent used in the desulfurizer.

### BRIEF DESCRIPTION OF THE DRAWINGS

[FIG. 1] FIG. 1 is a schematic diagram illustrating a configuration of a desulfurizer according to Embodiment 1.
[FIG. 2] FIG. 2 schematically illustrates an increase in pore size of Cu-BTC according to Embodiment 1.
[FIG. 3] FIG. 3 is a characteristic diagram showing X-ray powder diffraction patterns of samples according to Embodiment 1.
[FIG. 4] FIG. 4 is a characteristic diagram showing nitrogen adsorption isotherms of samples according to Embodiment 1.
[FIG. 5] FIG. 5 is a characteristic diagram showing results of pore structure analysis of samples according to Embodiment 1.
[FIG. 6] FIG. 6 is a characteristic diagram showing X-ray powder diffraction patterns of samples according to Embodiment 2.
[FIG. 7] FIG. 7 is a characteristic diagram showing nitrogen adsorption isotherms of samples according to Embodiment 2.
[FIG. 8] FIG. 8 is a characteristic diagram showing results of pore structure analysis of samples according to Embodiment 2.

### DESCRIPTION OF EMBODIMENTS

### (Underlying Knowledge Forming Basis of the Present Disclosure)

At the time the inventors arrived at the present disclosure, Ag zeolite was available in which Ag was introduced to the ion exchange sites of zeolite, as a desulfurizing agent to remove a sulfur compound from a fluid containing the sulfur compound.

This enabled effective removal of even the sulfur compound that is difficult to adsorb. However, the high cost of Ag has remained an issue in terms of cost.

In addition, as a desulfurizing agent to remove a sulfur compound from a fluid containing the sulfur compound, a metal-organic framework containing copper ions and benzene-1,3,5 tricarboxylic acid was available.

This material has a high content of copper ions in the framework, and has a high specific surface area. Hence, the material enables effective removal of even the sulfur compound that is difficult to adsorb, and is less expensive than Ag zeolite.

However, the amount of adsorption of the sulfur compound in the metal-organic framework is low compared to the theoretical amount of adsorption of the sulfur compound assumed from the content of the copper ions in the framework that serve as active points. Hence, the metal-organic framework fails to reduce the size of the desulfurizer.

Under these circumstances, the inventors came up with the idea of using a metal-organic framework with a large pore size to promote the diffusion of the sulfur compound in the pores and increase the number of adsorption sites accessible by the sulfur compound, thereby achieving a high amount of adsorption.

After achieving the idea, the inventors found a problem in that, in order to reduce the size of the desulfurizer, the pore size needs to be increased while maintaining the three-dimensional structure of the metal-organic framework containing copper ions and benzene-1,3,5 tricarboxylic acid with a high copper ion content. The inventors arrived at the subject matter of the present disclosure to solve the problem.

In view of the above, the present disclosure provides a desulfurizing agent capable of reducing the size of a desulfurizer by reducing the volume of the desulfurizing agent used in the desulfurizer.

Hereinafter, embodiments will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

### (Embodiment 1)

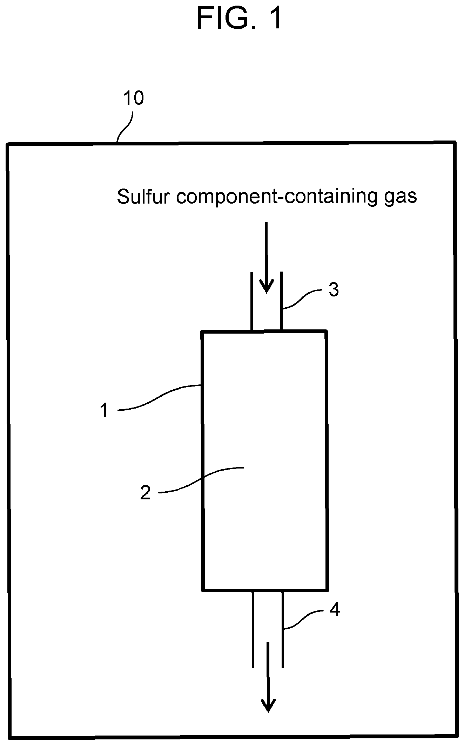

Hereinafter, Embodiment 1 will be described with reference to FIG. 1 to FIG. 5 and Table 1 to Table 3.

### [1-1. Configuration]

FIG. 1 is a schematic diagram illustrating a configuration of a desulfurizer according to Embodiment 1.

In FIG. 1, desulfurizer 10 includes container 1 with inlet 3 and outlet 4. Container 1 includes desulfurizing agent 2.

Desulfurizing agent 2 contains copper ions and benzene-1,3,5 tricarboxylic acid (BTC), and removes a sulfur compound from a fluid containing the sulfur compound. In desulfurizing agent 2, the integrated value of pore volumes of pores each having a pore size larger than 0.75 nm and at most 2.00 nm is twice as high as the integrated value of pore volumes of pores each having a pore size of at most 0.75 nm.

As will be explained in detail later, desulfurizing agent 2 is a metal-organic framework containing BTC and isophthalic acid or benzoic acid. In the metal-organic framework included in desulfurizing agent 2, part of BTC contained in Cu-BTC is replaced with isophthalic acid or benzoic acid. In the present embodiment, desulfurizing agent 2 containing copper ions and BTC, in which part of BTC is not replaced with isophthalic acid or benzoic acid, is called Cu-BTC.

Desulfurizing agent 2 may be in powder form. For example, it is preferable that the powder has a BET specific surface area of at least 500 m²/g. The average size of primary particles of desulfurizing agent 2 is not particularly limited, and the average size is, for example, at least 1 µm and at most 30 µm.

A metal-organic framework has a high specific surface area because the metal-organic framework has a uniform skeletal structure in which molecules contained in the three-dimensional framework are regularly arranged. The metal-organic framework can have precisely set physical or chemical properties such as pore size, pore structure, and surface functionality through an appropriate selection and combination of organic ligands and metal ions. Therefore, compared to conventional desulfurizing agents such as zeolite, the metal-organic framework has an extremely high degree of design freedom.

In order to both maintain the three-dimensional structure of Cu-BTC and increase the pore size, the inventors focused on benzoic acid in which one carboxylic acid is coordinated on the benzene ring, and isophthalic acid in which two carboxylic acids are coordinated on the benzene ring, in contrast to BTC in which three carboxylic acids are coordinated on the benzene ring.

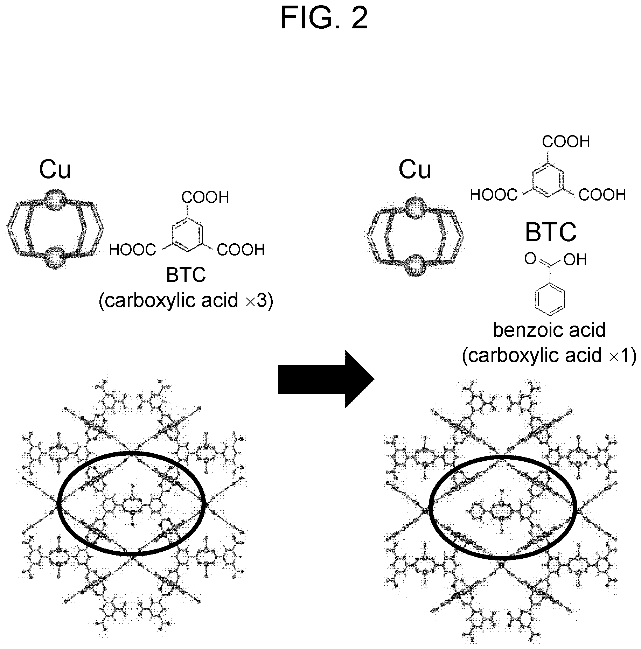

FIG. 2 schematically illustrates an increase in pore size of Cu-BTC according to Embodiment 1. In other words, FIG. 2 schematically illustrates that the pore size of Cu-BTC is increased by replacing part of BTC with benzoic acid.

As illustrated in FIG. 2, it is considered that the incorporation of benzoic acid, which has fewer carboxylic acids, into the structure of Cu-BTC can increase the pore size by generating a defect in the structure, while maintaining the basic three-dimensional structure of Cu-BTC. Although benzoic acid is shown as an example in FIG. 2, isophthalic acid is also expected to increase the pore size by similarly generating a defect.

The inventors obtained Cu-BTC-BA by replacing part of BTC in Cu-BTC with benzoic acid that has fewer carboxylic acids than BTC, and obtained Cu-BTC-ISO by replacing part of BTC in Cu-BTC with isophthalic acid that has fewer carboxylic acids than BTC.

The molar ratio of benzoic acid in Cu-BTC-BA and the molar ratio of isophthalic acid in Cu-BTC-ISO are desirably at least 10% and at most 50% relative to BTC.

Cu-BTC generally includes a large number of micropores. When the molar ratio exceeds 50%, the number of mesopores is considered to increase due to the presence of two or more adjacent benzoic acids or isophthalic acids. An increase in mesopores means a disruption of the three-dimensional structure of the metal-organic framework. This leads to a reduction in specific surface area, which makes it unsuitable for use as a desulfurizing agent.

Many metal-organic frameworks can be synthesized by a well-known solvothermal method (i.e. hydrothermal synthesis).

For example, a solution of a starting material is prepared by adding a copper ion source and organic ligands to a solvent such as ethylene glycol. The solution of the starting material is then heated to grow crystals of the metal-organic framework. An example of the copper ion source is copper sulphate hydrate.

The synthesized product with a metal-organic framework is washed using a cleaning fluid to remove remaining raw materials from the product. The cleaning fluid is, for example, methanol with low viscosity and low boiling point. The product after washing undergoes solid-liquid separation and drying, so that a powdered metal-organic framework is obtained.

An example of a synthesis method of Cu-BTC-BA and Cu-BTC-ISO according to Embodiment 1 will be described below in detail.

In Cu-BTC-BA, 3.6 mmol of anhydrous copper sulphate, 2.0 mmol of BTC, and 0.6 mmol of benzoic acid were mixed to 40 mL of ethylene glycol. The raw material solution was thus prepared. In the raw material solution, the molar ratio of benzoic acid relative to BTC was 30%.

In Cu-BTC-ISO, 3.6 mmol of anhydrous copper sulphate, 2.0 mmol of BTC, and 0.4 mmol of isophthalic acid were mixed to 40 mL of ethylene glycol. The raw material solution was thus prepared. In the raw material solution, the molar ratio of isophthalic acid relative to BTC was 20%. The raw material solutions were poured into sealed containers, and then heated at 120°C for 24 hours to obtain the product.

The obtained product was subj ected to suction filtration to obtain a precipitate. The obtained precipitate was fed into a methanol solution, washed by stirring for 24 hours, and again subjected to suction filtration to obtain a precipitate.

Finally, the washed precipitate was dried at 120°C. Cu-BTC-BA03 (Example 1) and Cu-BTC-ISO (Example 2) were thus obtained.

As Cu-BTC-BA, Cu-BTC-BA01 (Example 3) was obtained by the same synthesis method with 0.2 mmol of benzoic acid, and Cu-BTC08-BA024 (Example 4) was also obtained by the same synthesis method with 1.6 mmol of BTC and 0.48 mmol of benzoic acid.

Hexadecyltrimethylammonium bromide (CTAB) was then selected as a reagent that can generate a defect in the metal-organic framework, and benzoic acid in the Cu-BTC-BA synthesis method was set to 1.0 mmol of CTAB, so that Cu-BTC-CTAB (Example 5) was obtained.

Cu-BTC-HISO (Example 6) was also obtained as Cu-BTC-ISO by the same synthesis method with 0.4 mmol of 5-hydroxyisophthalic acid (HISO). Moreover, Cu-BTC (Comparative Example 1) was prepared as a sample for comparison by the same procedure without introduction of benzoic acid or isophthalic acid.

In order to check whether the obtained samples have the same three-dimensional structure as Cu-BTC, Cu-BTC-BA03 in Example 1 and Cu-BTC-ISO in Example 2 were subjected to X-ray powder diffraction analysis.

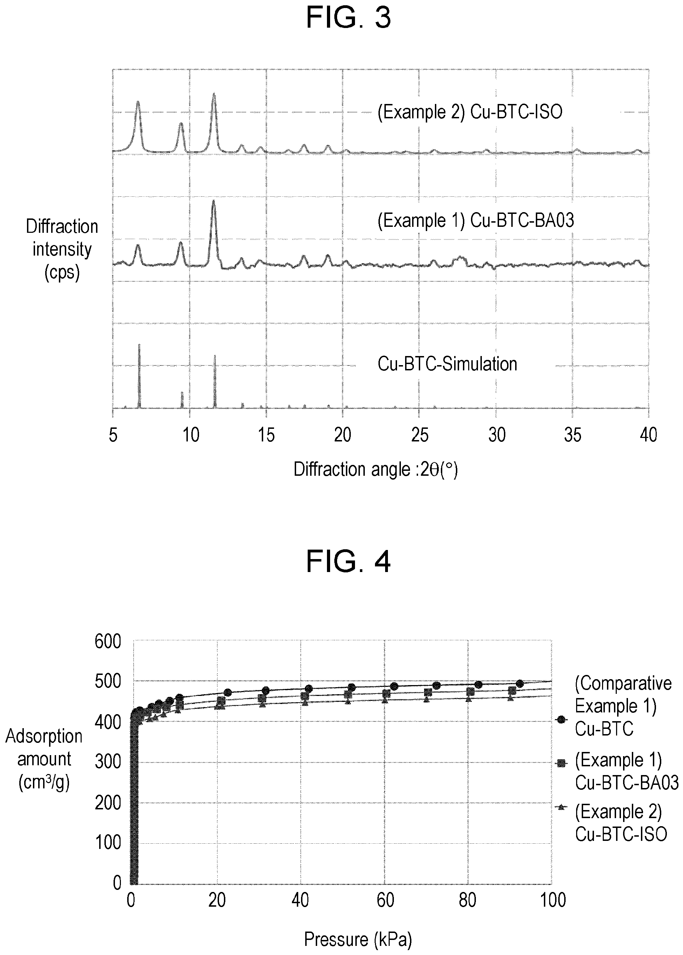

FIG. 3 is a characteristic diagram showing X-ray powder diffraction patterns of samples according to Embodiment 1. In FIG. 3, diffraction intensity is represented on the vertical axis and diffraction angle 2θ is represented on the horizontal axis. The X-ray powder diffraction analysis pattern simulations of Cu-BTC were based on Cambridge Crystal Structural Database, deposition number 112954.

As is clear from FIG. 3, only Cu-BTC-based peaks were identified in Cu-BTC-BA03 and Cu-BTC-ISO. This made it clear that Cu-BTC-BA03 and Cu-BTC-ISO have the same three-dimensional crystal structure as Cu-BTC, and contains no other impurity crystals.

Next, the nitrogen adsorption isotherms of Cu-BTC-BA03 in Example 1 and Cu-BTC-ISO in Example 2 were measured at 77 K. Before measurement, the samples were heated under vacuum at 150°C for 12 hours to remove residual solvent and adsorbed moisture.

FIG. 4 is a characteristic diagram showing nitrogen adsorption isotherms of samples according to Embodiment 1. In FIG. 4, nitrogen adsorption amount is represented on the vertical axis and adsorption equilibrium pressure is represented on the horizontal axis.

The isotherms of the samples, as shown in FIG. 4, were confirmed to be type I isotherms (IUPAC classification) due to the presence of micropores.

Table 1 shows BET specific surface area calculated from the adsorption isotherms in FIG. 4 using Brunauer-Emmett-Teller (BET) theory.

**[Table 1]**

| Sample | BET specific surface area (m²/g) |
|---|---|
| (Comparative Example 1) Cu-BTC | 1,839 |
| (Example 1) Cu-BTC-BA03 | 1,783 |
| (Example 2) Cu-BTC-ISO | 1,722 |

As shown in Table 1, the specific surface areas of Cu-BTC-BA03 in Example 1 and Cu-BTC-ISO in Example 2 were very close to the specific surface area of Cu-BTC in Comparative Example 1 in which benzoic acid or isophthalic acid was not introduced.

In view of this, it is considered that little disruption of the three-dimensional structure of the metal-organic framework due to adjacent benzoic or isophthalic acid occurred.

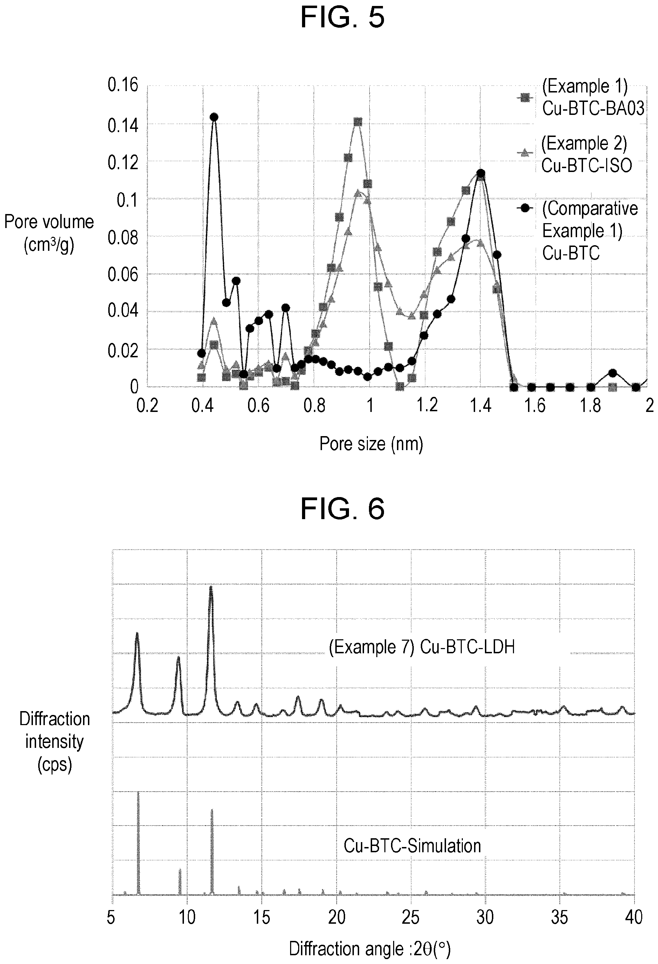

FIG. 5 is a characteristic diagram showing results of pore structure analysis of samples according to Embodiment 1. FIG. 5 shows pore volume at a given pore size. In FIG. 5, pore volume (cm³/g) is represented on the vertical axis and pore size (mm) is represented on the horizontal axis. This characteristic diagram was calculated by performing simulations using a non-local density functional theory (NLDFT) from the adsorption isotherms in FIG. 4. Since the results of the nitrogen adsorption isotherms were used, the analysis range covered pores larger than or equal to 0.39 nm which are larger than nitrogen molecules.

As is clear from FIG. 5, in Cu-BTC-BA03 in Example 1 and Cu-BTC-ISO in Example 2, in which benzoic acid or isophthalic acid was introduced, the pore volume around the pore size ranging from 0.4 nm to 0.5 nm was small and the pore volume around the pore size ranging from 0.9 nm to 1.0 nm was large compared to Cu-BTC in Comparative Example 1.

Table 2 shows the results of integration of the pore volumes in the regions with pore sizes ranging from 0.39 nm to 0.75 nm and ranging from 0.76 nm to 2.00 nm of Cu-BTC in Comparative Example 1, Cu-BTC-BA03 in Example 1, Cu-BTC-ISO in Example 2, Cu-BTC-BA01 in Example 3, and Cu-BTC08-BA024 in Example 4.

**[Table 2]**

| Sample | A 0.39 to 0.75 nm (cm³/g) | B 0.76 to 2 nm (cm³/g) | B/A |
|---|---|---|---|
| (Comparative Example 1) Cu-BTC | 0.44 | 0.49 | 1.1 |
| (Example 1) Cu-BTC-BA03 | 0.08 | 1.15 | 14.3 |
| (Example 2) Cu-BTC-ISO | 0.12 | 1.03 | 8.5 |
| (Example 3) Cu-BTC-BA01 | 0.33 | 0.73 | 2.2 |
| (Example 4) Cu-BTC08- BA024 | 0.16 | 1.02 | 6.1 |

As shown in Table 2, in Cu-BTC in Comparative Example 1, the integrated value of pore volumes of pores each having a pore size larger than 0.75 nm and at most 2.00 nm was 1.1 times as high as the integrated value of pore volumes of pores each having a pore size at most 0.75 nm. In contrast, this was 14.3 times in Cu-BTC-BA03, 8.5 times in Cu-BTC-ISO, 2.2 times in Cu-BTC-BA01, and 6.1 times in Cu-BTC08-BA024. This made it clear that the introduction of benzoic acid or isophthalic acid increases the proportion of large pores in the micropores.

### [1-2. Operation]

The operation and action of desulfurizer 10 configured as described above will be described below.

Desulfurizing agent 2 containing Cu-BTC-BA, Cu-BTC-ISO, etc. is housed inside container 1 of desulfurizer 10. A sulfur component-containing gas is then supplied to inlet 3 from a sulfur component-containing gas supply source (not illustrated).

The supplied sulfur component-containing gas passes through container 1 while contacting desulfurizing agent 2 in container 1.

Since the sulfur compound is removed from the sulfur component-containing gas by desulfurizing agent 2, the sulfur component-containing gas from which the sulfur component has been removed is discharged from outlet 4.

Examples of the sulfur component-containing gas include city gas, natural gas, and hydrocarbon fuel such as liquefied petroleum gas (LPG). The hydrocarbon fuel contains a sulfur compound added for security purposes to allow the hydrocarbon fuel to be detected quickly in the event of a leak.

An example of a sulfur compound contained in a sulfur component-containing gas is tetrahydrothiophene (THT) having a molecular size of 0.59 nm.

In Cu-BTC-BA and Cu-BTC-ISO, the number of pores with a pore size larger than the molecular size of THT was increased compared to Cu-BTC. It can therefore be considered that the diffusion of THT in the pores was promoted, increasing the number of adsorption sites accessible by THT and increasing the amount of adsorption of THT.

Table 3 shows THT adsorption amount at 15 ppm in each sample. The amount of adsorbed THT was evaluated in the following manner: a sample and THT gas were introduced into a sealed bag; after leaving the bag for 24 hours, the THT concentration in the bag was analyzed to measure the amount of adsorbed THT relative to a plurality of equilibrium concentrations; the adsorption isotherm was calculated using Langmuir's equation, assuming that adsorbate molecules have monolayer adsorption; and the amount of adsorption at 15 ppm was calculated.

**[Table 3]**

| Sample | THT adsorption amount at 15 ppm (wt%) |
|---|---|
| (Comparative Example 1) Cu-BTC | 7.4 |
| (Example 1) Cu-BTC-BA03 | 11.8 |
| (Example 2) Cu-BTC-ISO | 9.9 |
| (Example 3) Cu-BTC-BA01 | 10.0 |
| (Example 4) Cu-BTC08-BA024 | 13.6 |
| (Example 5) Cu-BTC-CTAB | 9.5 |
| (Example 6) Cu-BTC-HISO | 10.8 |

As is clear from Table 3, each of Cu-BTC-BA03 in Example 1, Cu-BTC-ISO in Example 2, Cu-BTC-BA01 in Example 3, and Cu-BTC08-BA024 in Example 4, in which benzoic acid or isophthalic acid was introduced, exhibited a higher amount of adsorbed THT than Cu-BTC in Comparative Example 1. Moreover, each of Cu-BTC-CTAB in Example 5 in which CTAB was introduced and Cu-BTC-HISO in Example 6 in which HISO was introduced also exhibited a higher amount of adsorbed THT than Cu-BTC in Comparative Example 1.

### [1-3. Advantageous Effects, etc.]

As described above, in the present embodiment, desulfurizer 10 includes container 1 with inlet 3 and outlet 4. Container 1 includes desulfurizing agent 2.

Desulfurizing agent 2 contains copper ions and benzene-1,3,5 tricarboxylic acid, and removes a sulfur compound from a fluid containing the sulfur compound. In desulfurizing agent 2, the integrated value of pore volumes of pores each having a pore size larger than 0.75 nm and at most 2.00 nm was at least twice as high as the integrated value of pore volumes of pores each having a pore size of at most 0.75 nm.

This promotes the diffusion of the sulfur compound in the pores of desulfurizing agent 2. As a result, the number of adsorption sites of desulfurizing agent 2 accessible by the sulfur compound increases, leading to an increased amount of sulfur compound adsorbed per mass. Accordingly, it is possible to provide desulfurizing agent 2 capable of reducing the size of desulfurizer 10 by reducing the volume of desulfurizing agent 2 used in desulfurizer 10.

As in the present embodiment, a defect may be generated in the structure of desulfurizing agent 2 containing copper ions and BTC by benzoic acid or isophthalic acid.

This promotes the diffusion of the sulfur compound in the pores of desulfurizing agent 2. As a result, the number of adsorption sites of desulfurizing agent 2 accessible by the sulfur compound increases, leading to an increased amount of sulfur compound adsorbed per mass.

Furthermore, the generation of the defect changes the electronic state of the adsorption sites, leading to an increased amount of the sulfur compound adsorbed per mass. Accordingly, it is possible to provide desulfurizing agent 2 capable of reducing the size of desulfurizer 10 by further reducing the volume of desulfurizing agent 2 used in desulfurizer 10.

The amount of adsorbed THT in Cu-BTC-BA03 at 15 ppm in Example 1 in the present embodiment was actually 1.59 times as high as Cu-BTC in Comparative Example 1. It is therefore expected that the storage volume of desulfurizing agent 2 can be reduced by 1/1.59 times.

The amount of adsorbed THT in Cu-BTC-ISO at 15 ppm in Example 2 was 1.33 times as high as Cu-BTC in Comparative Example 1. It is therefore expected that the storage volume of desulfurizing agent 2 can be reduced by 1/1.33 times.

The amount of adsorbed THT in Cu-BTC-BA01 at 15 ppm in Example 3 was 1.35 times as high as Cu-BTC in Comparative Example 1. It is therefore expected that the storage volume of desulfurizing agent 2 can be reduced by 1/1.35 times.

The amount of adsorbed THT in Cu-BTC08-BA024 at 15 ppm in Example 4 was 1.83 times as high as Cu-BTC in Comparative Example 1. It is therefore expected that the storage volume of desulfurizing agent 2 can be reduced by 1/1.83 times.

The amount of adsorbed THT in Cu-BTC-CTAB at 15 ppm in Example 5 was 1.28 times as high as Cu-BTC in Comparative Example 1. It is therefore expected that the storage volume of desulfurizing agent 2 can be reduced by 1/1.28 times.

Moreover, the amount of adsorbed THT in Cu-BTC-HISO at 15 ppm in Example 6 was 1.45 times as high as Cu-BTC in Comparative Example 1. It is therefore expected that the storage volume of desulfurizing agent 2 can be reduced by 1/1.45 times.

In the present embodiment, a defect may be generated in the structure of desulfurizing agent 2 containing copper ions and BTC by hexadecyltrimethylammonium bromide.

This promotes the diffusion of the sulfur compound in the pores of desulfurizing agent 2. As a result, the number of adsorption sites of desulfurizing agent 2 accessible by the sulfur compound increases, leading to an increased amount of sulfur compound adsorbed per mass.

Furthermore, the generation of the defect changes the electronic state of the adsorption sites, leading to an increased amount of sulfur compound adsorbed per mass. Accordingly, it is possible to provide desulfurizing agent 2 capable of reducing the size of desulfurizer 10 by further reducing the volume of desulfurizing agent 2 used in desulfurizer 10.

As described in the present embodiment, the sulfur compound may be a sulfur compound or THT having a molecular size less than 0.75 nm.

With this, the sulfur compound in the supplied sulfur component-containing gas is smaller than the pore size of the main pores, so that the diffusion of the sulfur compound in the pores of desulfurizing agent 2 is further promoted. As a result, the number of adsorption sites of desulfurizing agent 2 accessible by the sulfur compound increases, leading to an increased amount of sulfur compound adsorbed per mass. Accordingly, it is possible to provide desulfurizing agent 2 capable of reducing the size of desulfurizer 10 by further reducing the volume of desulfurizing agent 2 used in desulfurizer 10.

### (Embodiment 2)

Hereinafter, Embodiment 2 will be described with reference to FIG. 1 and FIG. 6 to FIG. 8 and Table 4 to Table 6.

### [2-1. Configuration]

In FIG. 1, desulfurizer 10 includes container 1 with inlet 3 and outlet 4. Container 1 includes desulfurizing agent 2.

Desulfurizing agent 2 contains copper ions and BTC. In desulfurizing agent 2, the integrated value of pore volumes of pores each having a pore size larger than 0.75 nm and at most 2.00 nm is twice as high as the integrated value of pore volumes of pores each having a pore size of at most 0.75 nm.

In order to both maintain the three-dimensional structure of Cu-BTC and increase the pore size, the inventors focused on Cu-BTC having three kinds of pores with pore sizes of 0.5 nm, 1.1 nm, and 1.3 nm. The inventors then considered that an addition of an additive enables control of the orientation of the crystal growth, allowing Cu-BTC with an increased number of pores with a larger pore size to be synthesized.

The inventors obtained Cu-BTC-LDH with controlled orientation of crystal growth by adding layered double hydroxide (LDH) containing magnesium (Mg) and aluminum (Al) at the time of synthesis of Cu-BTC.

LDH containing Mg and Al is an example of, but not limited to, an additive added at the time of synthesis of Cu-BTC. Examples of the additive added at the time of synthesis of Cu-BTC include an additive containing Al and an additive containing sodium (Na) or potassium (K). Moreover, sodium nitrate (NaNO₃), sodium chloride (NaCl), sodium bromide (NaBr), potassium nitrate (KNO₃), potassium chloride (KCl), or potassium bromide (KBr) may be added as an additive at the time of synthesis of Cu-BTC.

The molar ratio of LDH introduced at the time of synthesis of Cu-BTC-LDH is desirably at least 5% and at most 20% relative to BTC. LDH changes not only the orientation of crystal growth, but also the rate of crystal growth. It is therefore considered that excessive introduction promotes the growth of crystals and, conversely, disrupts the structure of Cu-BTC.

A detailed description of an example of a synthesis method of Cu-BTC-LDH according to Embodiment 2 will be given below.

First, in Cu-BTC-LDH, 3.6 mmol of anhydrous copper sulphate, 2.0 mmol of BTC, and 0.2 mmol of LDH containing Mg and Al were mixed to 40 mL of ethylene glycol. The raw material solution was thus prepared. In the raw material solution, the molar ratio of LDH containing Mg and Al relative to BTC was 10%. The raw material solution was poured into a sealed container and then heated at 120°C for 24 hours to obtain the product.

The obtained product was subjected to suction filtration to obtain a precipitate. The obtained precipitate was fed into a methanol solution, washed by stirring for 24 hours, and again subjected to suction filtration to obtain a precipitate. Finally, the washed precipitate was dried at 120°C. Cu-BTC-LDH (Example 7) was thus obtained.

In order to check whether the obtained sample has the same three-dimensional structure as Cu-BTC, Cu-BTC-LDH was subjected to X-ray powder diffraction analysis, and was compared with X-ray powder diffraction analysis pattern simulations of Cu-BTC.

FIG. 6 is a characteristic diagram showing X-ray powder diffraction patterns of samples according to Embodiment 2. In FIG. 6, diffraction intensity is represented on the vertical axis and diffraction angle 2θ is represented on the horizontal axis.

As is clear from FIG. 6, only Cu-BTC-based peaks were identified in Cu-BTC-LDH in Example 7. This made it clear that Cu-BTC-LDH has the same three-dimensional crystal structure as Cu-BTC, and contains no other impurity crystals.

Next, the nitrogen adsorption isotherm of Cu-BTC-LDH at 77 K in Example 7 was measured. Before measurement, the sample was heated under vacuum at 150°C for 12 hours to remove residual solvent and adsorbed moisture.

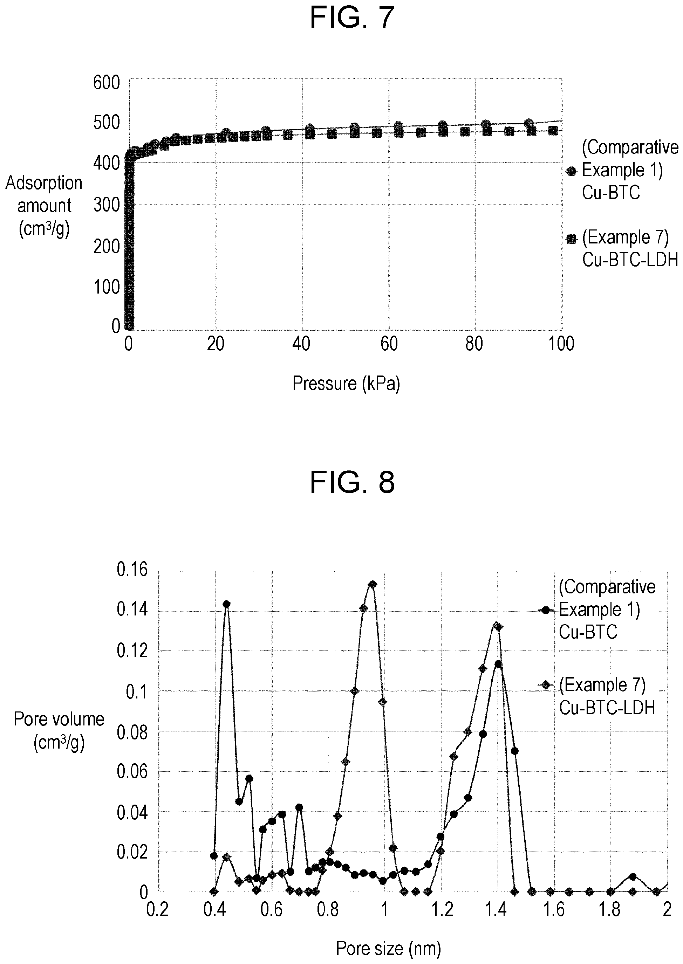

FIG. 7 is a characteristic diagram showing nitrogen adsorption isotherms of samples according to Embodiment 2. In FIG. 7, nitrogen adsorption amount is represented on the vertical axis and adsorption equilibrium pressure is represented on the horizontal axis.

The inventors confirmed that the isotherms of the samples, as shown in FIG. 7, were type I isotherms (IUPAC classification) due to the presence of micropores.

Table 4 shows BET specific surface area calculated from the adsorption isotherms in FIG. 7 using the BET theory.

**[Table 4]**

| Sample | BET specific surface area (m²/g) |
|---|---|
| (Comparative Example 1) Cu-BTC | 1,839 |
| (Example 7) Cu-BTC-LDH | 1,825 |

As shown in Table 4, the specific surface area of Cu-BTC-LDH in Example 7 was very close to the specific surface area of Cu-BTC in Comparative Example 1 in which LDH containing Mg and Al was not introduced. With this, it can be considered that little disruption of the three-dimensional structure of the metal-organic framework occurred due to excessive introduction of LDH containing Mg and Al.

FIG. 8 is a characteristic diagram showing results of pore structure analysis of samples according to Embodiment 2. FIG. 8 shows pore volume at a given pore size. In FIG. 8, pore volume (cm³/g) is represented on the vertical axis and pore size (mm) is represented on the horizontal axis. This characteristic diagram was calculated by performing simulations using the NLDFT from the adsorption isotherms in FIG. 7.

As is clear from FIG. 8, in Cu-BTC-LDH in Example 7 in which LDH containing Mg and Al was introduced, the pore volume around pore size ranging from 0.4 nm to 0.5 nm was small and the pore volume around pore size ranging from 0.9 nm to 1.0 nm was large compared to Cu-BTC.

Table 5 shows the results of integration of the pore volumes in the regions with pore sizes ranging from 0.39 nm to 0.75 nm and ranging from 0.76 nm to 2.00 nm of Cu-BTC in Comparative Example 1 and Cu-BTC-LDH in Example 7.

**[Table 5]**

| Sample | A 0.39 to 0.75 nm (cm³/g) | B 0.76 to 2 nm (cm³/g) | B/A |
|---|---|---|---|
| (Comparative Example 1) Cu-BTC | 0.44 | 0.49 | 1.1 |
| (Example 7) Cu-BTC-LDH | 0.053 | 1.05 | 23.0 |

As shown in Table 5, in Cu-BTC, the integrated value of pore volumes of pores each having a pore size larger than 0.75 nm and at most 2.00 nm was 1.1 times as high as the integrated value of pore volumes of pores each having a pore size of at most 0.75 nm. In contrast, in Cu-BTC-LDH, this was 23.0 times. This made it clear that the introduction of LDH containing Mg and Al changes the orientation of crystal growth, and increases the proportion of large pores in the micropores.

### [2-2. Operation]

The operation and action of desulfurizer 10 configured as described above will be described below.

Desulfurizing agent 2 containing Cu-BTC-LDH is housed in container 1 of desulfurizer 10. Sulfur component-containing gas is then supplied to inlet 3 from a sulfur component-containing gas supply source (not illustrated).

The supplied sulfur component-containing gas passes through container 1 while contacting desulfurizing agent 2 in container 1.

Since the sulfur compound is removed from the sulfur component-containing gas by desulfurizing agent 2, the sulfur component-containing gas from which the sulfur component has been removed is discharged from outlet 4. An example of the sulfur compound contained in the sulfur component-containing gas is THT having a molecular size of 0.59 nm.

In Cu-BTC-LDH, the number of pores with a pore size larger than the molecular size of THT is large compared to Cu-BTC. It can therefore be considered that the diffusion of THT in the pores is promoted, increasing the number of adsorption sites accessible by THT and increasing the amount of adsorption of THT.

Table 6 shows THT adsorption amount at 15 ppm in each sample.

**[Table 6]**

| Sample | THT adsorption amount at 15 ppm (wt%) |
|---|---|
| (Comparative Example 1) Cu-BTC | 7.4 |
| (Example 7) Cu-BTC-LDH | 9.8 |

As is clear from Table 6, Cu-BTC-LDH in Example 7 in which LDH containing Mg and Al was introduced exhibited a higher amount of adsorbed THT than Cu-BTC in Comparative Example 1.

### [2-3. Advantageous Effects, etc.]

As described above, in the present embodiment, desulfurizer 10 includes container 1 with inlet 3 and outlet 4. Container 1 includes desulfurizing agent 2.

As in the present embodiment, the crystal growth of desulfurizing agent 2 containing copper ions and benzene-1,3,5 tricarboxylic acid may be controlled by LDH containing Mg and Al.

This promotes the diffusion of the sulfur compound in the pores of desulfurizing agent 2. As a result, the number of adsorption sites of desulfurizing agent 2 accessible by the sulfur compound increases, leading to an increased amount of sulfur compound adsorbed per mass. Moreover, the addition of metal species changes the electronic state of the adsorption sites, leading to a further increase in the amount of sulfur compound adsorbed per mass.

Accordingly, it is possible to provide desulfurizing agent 2 capable of further reducing the size of desulfurizer 10 by further reducing the volume of desulfurizing agent 2 used in desulfurizer 10.

The amount of adsorbed THT of Cu-BTC-LDH at 15 ppm in Example 7 in the present embodiment was actually 1.32 times as high as Cu-BTC in Comparative Example 1. Hence, it is expected that the storage volume of desulfurizing agent 2 can be reduced by 1/1.32 times.

Moreover, in the present embodiment, the crystal growth in desulfurizing agent 2 may be controlled by an additive containing Al.

Moreover, in the present embodiment, the crystal growth in desulfurizing agent 2 may be controlled by an additive containing Na or K.

This promotes the diffusion of the sulfur compound in the pores of desulfurizing agent 2. As a result, the number of adsorption sites of desulfurizing agent 2 accessible by the sulfur compound increases, leading to an increased amount of sulfur compound adsorbed per mass. Moreover, the addition of metal species changes the electronic state of the adsorption sites, leading to a further increase in the amount of sulfur compound adsorbed per mass.

Accordingly, it is possible to provide desulfurizing agent 2 capable of further reducing the size of desulfurizer 10 by further reducing the volume of desulfurizing agent 2 used in desulfurizer 10.

Moreover, in the present embodiment, the crystal growth in desulfurizing agent 2 may be controlled by NaNO₃, NaCl, NaBr, KNO₃, KCl, or Kbr.

This promotes the diffusion of the sulfur compound in the pores of desulfurizing agent 2. As a result, the number of adsorption sites of desulfurizing agent 2 accessible by the sulfur compound increases, leading to an increased amount of sulfur compound adsorbed per mass. Moreover, the addition of metal species changes the electronic state of the adsorption sites, leading to a further increase in the amount of sulfur compound adsorbed per mass.

Accordingly, it is possible to provide desulfurizing agent 2 capable of further reducing the size of desulfurizer 10 by further reducing the volume of desulfurizing agent 2 used in desulfurizer 10.

### (Other Embodiments)

As described above, Embodiment 1 and Embodiment 2 have been described as examples of the technique disclosed in the present application. However, the technique according to the present disclosure is not limited to the above examples, and can be applied to embodiments in which changes, replacements, additions, omissions, etc. are made as appropriate. Moreover, each structural element described in Embodiment 1 and Embodiment 2 can be combined to form a new embodiment.

Other embodiments will be described below as examples.

In Embodiment 1, benzoic acid and isophthalic acid were described as examples of the material with fewer carboxylic acids. The material that generates a defect in desulfurizing agent 2 may be any material in which two or less carboxylic acids are coordinated on the benzene ring. Therefore, the material is not limited to benzoic acid or isophthalic acid.

When m-hydroxybenzoic acid is used as a material added at the time of synthesis of desulfurizing agent 2, a high amount of adsorption of THT can be achieved.

In Embodiment 2, LDH has been described as an example of the material that changes the orientation of crystal growth. As a material to be added to desulfurizing agent 2, any material may be used which changes the orientation of crystal growth. Therefore, the material is not limited to LDH. When lauric acid is used as a material added at the time of synthesis of desulfurizing agent 2, a high amount of adsorption of THT can be achieved.

Since the above-described embodiments are for exemplifying the technique of the present disclosure, various modifications, replacements, additions, omissions, and the like can be made within the scope of the appended claims or of their equivalents.

### INDUSTRIAL APPLICABILITY

The present disclosure is applicable to desulfurizing agents for removing sulfur compounds from fuel gases containing sulfur compounds. Specifically, the present disclosure is applicable to, for example, fuel cells capable of converting city gas into hydrogen and generating electricity.

### REFERENCE MARKS IN THE DRAWINGS

- 1: container
- 2: desulfurizing agent
- 3: inlet
- 4: outlet
- 10: desulfurizer

## Claims

1. A desulfurizing agent that removes a sulfur compound from a fluid containing the sulfur compound, the desulfurizing agent comprising:
a copper ion; and
a benzene-1,3,5 tricarboxylic acid,
wherein the desulfurizing agent is a structure including pores, and an integrated value of pore volumes of pores each having a pore size larger than 0.75 nm and at most 2 nm is at least twice as high as an integrated value of pore volumes of pores each having a pore size of at most 0.75 nm.

2. The desulfurizing agent according to claim 1,
wherein each of the pore sizes and each of the pore volumes are measured using a non-local density functional theory (NLDFT).

3. The desulfurizing agent according to claim 1,
wherein a defect is generated in a structure of the desulfurizing agent by benzoic acid or isophthalic acid.

4. The desulfurizing agent according to claim 1,
wherein a defect is generated in a structure of the desulfurizing agent by hexadecyltrimethylammonium bromide.

5. The desulfurizing agent according to claim 1,
wherein a crystal growth in the desulfurizing agent is controlled by an additive containing aluminum.

6. The desulfurizing agent according to claim 1,
wherein a crystal growth in the desulfurizing agent is controlled by layered double hydroxide containing magnesium and aluminum.

7. The desulfurizing agent according to claim 1,
wherein a crystal growth in the desulfurizing agent is controlled by an additive containing sodium or potassium.

8. The desulfurizing agent according to claim 1,
wherein a crystal growth in the desulfurizing agent is controlled by sodium nitrate, sodium chloride, sodium bromide, potassium nitrate, potassium chloride, or potassium bromide.

9. The desulfurizing agent according to any one of claims 1 to 8,
wherein the sulfur compound has a molecular size less than 0.75 nm.

10. The desulfurizing agent according to any one of claims 1 to 8,
wherein the sulfur compound is tetrahydrothiophene.
